# EUROPEAN PATENT SPECIFICATION

(11) **EP 0 924 928 B1**
(45) Date of publication and mention of the grant of the patent: **06.10.2004**
(21) Application number: 98122255.7
(22) Date of filing: 23.11.1998
(51) Int. Cl.: H04N 7/14

(54) **Communication system and method for transmitting a video signal**
Kommunikationssystem und Verfahren für die Übertragung eines Videosignals
Système et méthode de communication pour un signal vidéo

(30) Priority: 19.12.1997 GB 9726769
(43) Date of publication of application: 23.06.1999
(73) Proprietor: MOTOROLA LTD, Basingstoke, Hampshire RG22 4PD (GB)
(72) Inventor: Van den Heuvel, Anthony, Fountain Hills, Arizona 85268 (US); Watson, Andy, Badford, Bath, Avon BA1 7TS (GB); Anderson, Nick, Wroughton, Swindon, Wiltshire SN4 9JS (GB); Kotzin, Mike, Buffalo Grove, Illinois 60089 (US); Dellaverson, Lou, Barrington, Illinois 60010 (US)
(74) Representative: McCormack, Derek James

(56) References cited:
- EP-A- 0 751 685
- WO-A-98/27733
- WO-A-98/41021
- FR-A- 2 701 342
- 'H.245 Control Protocol for multimedia communication' ITU-T RECOMMENDATION H.245 July 1997, pages 69 - 73

## Description

### Field of the Invention

The current invention relates to an apparatus and a method for communication of video signals, and more specifically to a system having variable rates of communication of video.

### Background of the Invention

An increasing proportion of telecommunication services include communication of video signals. Thus the need for efficient transmission of these is of increasing importance. For example, in the UMTS cellular communication system currently under standardisation, video services have been identified as constituting a significant part of the expected use. These services include video conferencing and video telephony.

Much research has focused on the development of video coders able to compress the video signal to low video data rates for efficient communication. Modem video coders provide both picture and frame-to-frame compression. The amount of information required to transmit a video sequence thus depends on the amount of detail in the picture and the amount of movement in the sequence. Typically, video is delivered over a fixed bandwidth circuit. Thus, bandwidth limited video using the coders described before often have the characteristic that the picture lacks detail when there is a lot of movement, but when the subject stops moving, the information transmission is used to build up detail in the picture. Some other coders reduce the frame rate (movement becomes jerky) when the bandwidth is limited. There is thus a general trade-off between quality and the video data rate of the coded video signal.

FR-A-2 701 342 describes a communication device wherein a number of conventional communication elements, including a central unit having a codec, a telephone handset, a loudspeaker, a camera, a video recorder etc, are integrated into a compact assembly.

WO-A-98 41021, which is pubtished after the priority dante of the current application, discloses an improved imaging system with increased viewer control allowing a viewer to adjust spatial and temporal resolution, quantization and other parameters of the video transmission.

ITU-T Recommendation H-245 "Control protocol for multimedia communication describes the possibility for a receive terminal of requesting a mode of transmission from a transmitter terminal.

In most communication systems, video signals are delivered over a bandwidth limited circuit or communication link. This is very inflexible and results in varying quality or excess use of bandwidth.

Some systems contain an option between different bandwidths for a video connection at communication link setup. Even if this bandwidth is chosen by the receiving user it is still very inflexible and provides insufficient control to the receiving user. The video quality for a video data rate changes with the video content and the receiving user will therefore still receive variable quality beyond his control, even if he can select the bandwidth and therefore the general quality level. The receiving user's requirements may in addition change dynamically during the transmission depending for example on the video signal which is being received. Additionally the conditions of the communication system may vary resulting in for example the cost associated with a given bandwidth changing as the loading of the communication system changes.

Thus, benefits can be obtained from a more dynamic control of the video data rate.

### Summary of the Invention

The current invention seeks to provide a communication system and method for transmitting a video signal with improved dynamic control.

According to one aspect of the invention, a radio communication system is provided for transmitting a first video signal, including a first video transmitter with means for generating a first video transmission from said first video signal, a first communication link sharing a common resource with other services and a first video receiver located remotely from the first video transmitter,
characterised by comprising: means for locally receiving a user input at the first video receiver; means for providing a feedback of said user input to said first video transmitter from said first video receiver; means for altering at least a first characteristic of said first video transmission responsive to said user input and the first video receiver further comprising means for indicating to a user at least a second characteristic of the first video transmission.

This system allows the receiving user to dynamically control the video transmission thereby improving the dynamic control in comparison to conventional systems.

The receiving user is presented with one or more indicators of a characteristic of the video transmission, for example the cost of the transmission. Advantageously, the system may further include means for emulating the effect of the user input. According to a different aspect of the invention the user input may be used to control a plurality of video transmitters.

According to another aspect of the invention, a method is provided for transmitting a first video signal in a radio communication system including a first video transmitter with means for generating a first video transmission from said first video signal, a first communication link sharing a common radio resource with other services and a first video receiver located remotely from the first video transmitter, characterised by comprising the steps of: locally receiving a user input at the first video receiver; providing a feedback of said user input to said first video transmitter from said first video receiver; indicating at least a second characteristic of said first video transmission at the first video receiver; and altering at least a first characteristic of said first video transmission responsive to said user input.

### Brief Description of the Drawings

An embodiment of the present invention is described below, by way of example only, with reference to the accompanying drawings.
FIG. 1 is an illustration of a preferred embodiment of a video communication system according to the invention.
FIG. 2 is an illustration of a flow chart of a method for controlling the video communication according to the invention.
FIG. 3 is an illustration of a cellular communications system in which the invention can be incorporated.
FIG. 4 is an illustration of an embodiment of the invention deployed in a two way video communication system.

### Detailed Description of a Preferred Embodiment

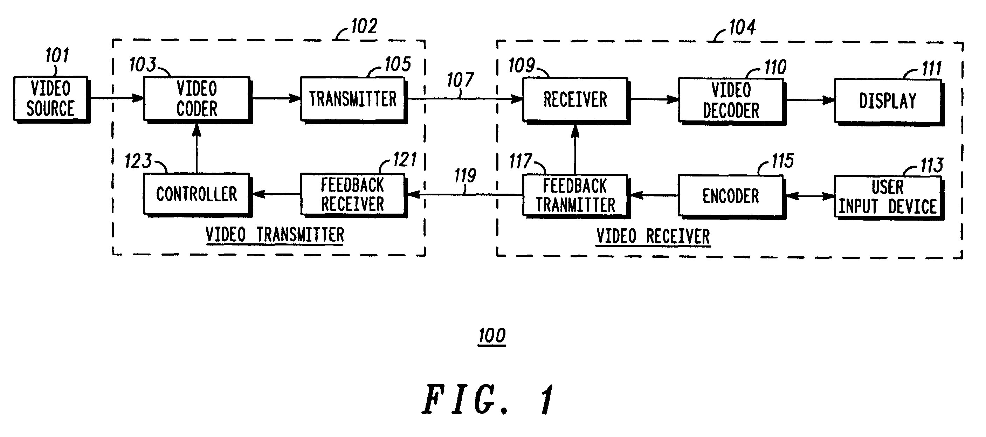

According to the present invention there is provided a communication system 100 and a method 200 for communication of video signals from a video source to a receiving user. An embodiment of the invention is illustrated in FIG. 1. The system consists of a video transmitter 102 and a video receiver 104 communicating over a video communication link 107.

The video signal from the video source 101 is applied to a video coder 103 which translates the video signal into video data. The video data is transmitted on the video communication link 107 by a transmitter 105. The video data is received by a receiver 109 in the video receiver 104 and the video signal is decoded in a video decoder 110 and presented to the user on a suitable display 111, typically a monitor.

Means are provided for a user input 113 from the receiving user to the video transmitter 102. This user input is transmitted back over a feedback communication link 119 by a feedback transmitter 117 after encoding in an encoder 115. A feedback receiver 121 in the video transmitter 102 receives the user input and feeds it to a controller 123 which controls the video encoder 103, thereby adjusting the video data rate transmitted on the video communication link 107.

The invention provides a feedback mechanism allowing the user to control the video coding performed. The quality of the transmitted video signal is dependent on the video data rate and the invention thereby provides the user with means for controlling the trade-off between quality of the video signal and the video data rate. The quality of the video signal also depends on the amount of movement or detail in the picture. A specific example of an embodiment of the invention is a video transmission system where the user inputs a maximum video data rate for the video communication link. The video coder will be under control of this input via the feedback mechanism and will produce a video signal with a video data rate lower than specified. As a consequence the quality of the picture may vary according to the current characteristics of the picture. Alternatively, the user may specify a quality level and the video data rate may vary according to the current characteristics of the picture.

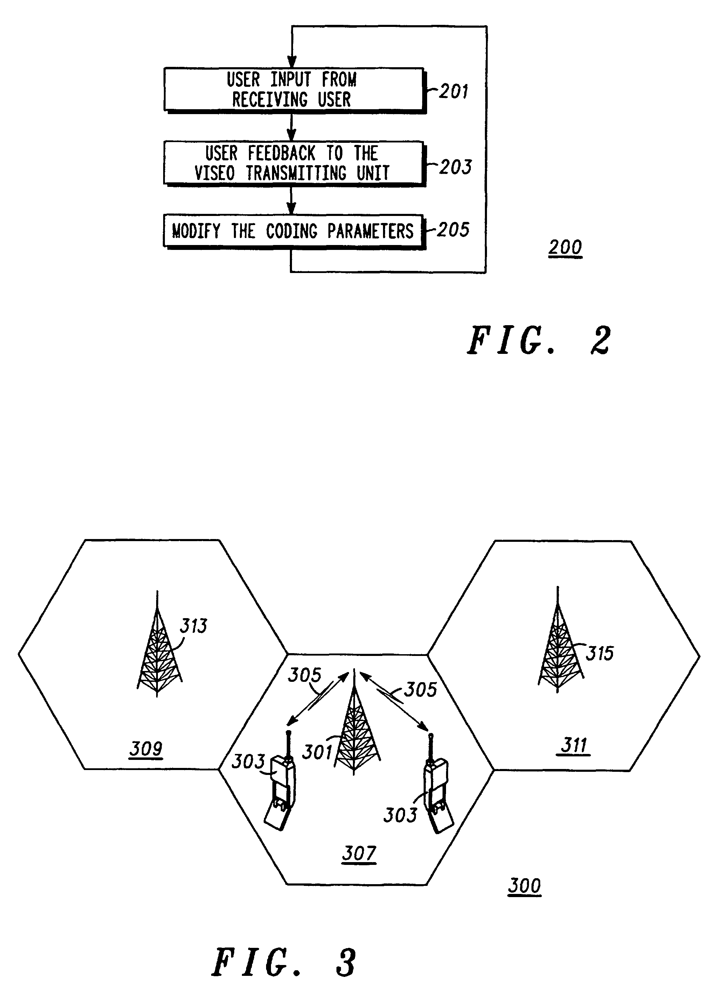

FIG. 2 illustrates a flow chart of the preferred method 200 of controlling a video communication according to the invention. Initially the video signal from the video source is coded according to some current coding parameters, transmitted and received and displayed by the video receiver. The method 200 of controlling this video signal includes the following steps:
step 201 which consists in obtaining a user input from the receiving user,
step 203 where this user input is fed back to the video transmitting unit, and
step 205 where the user input is used to modify the coding parameters.

The process subsequently repeats in step 201 with the coding now being based on the modified parameters resulting from the user input of the receiving user.

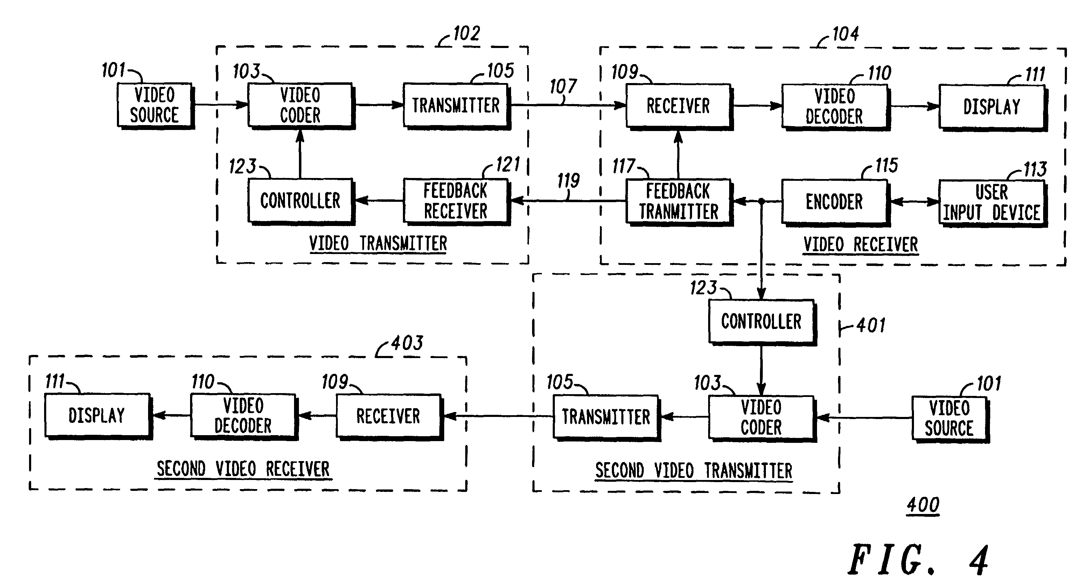

The preferred embodiment of the invention is in a communication system where the video communication link shares a common resource with other services. In this example the invention provides a method for the user to control the transmitted video data rate and thus the resource required for the specific service. Specifically the communication system can be a cellular communication system 300 comprising at least one central station and a plurality of remote units. FIG. 3 illustrates such a system where a central station 301 communicates with a number of remote units 303 over radio channels 305. Specifically, the communication system can be a cellular system where the central station 301 covers users within a certain geographical area 307 whereas other geographical areas 309,311 are covered by other central stations 313,315. An example of such a system is the UMTS cellular system undergoing standardisation in the European Telecommunications Standards Institute.

The shared resource is in this example the frequency spectrum allocated to the cellular communication system. In some shared resource systems the resource allocation is controlled centrally and users are only allowed to use a given resource after it has been assigned to the user. In this case a changed resource allocation must be set up before the video data rate on the video communication link can be changed. However, the preferred embodiment of the invention is in a communication system where there is no central allocation of resource but where the individual video transmitting units can alter the resource usage without prior assignment. This method is typically used in packet based communication systems such as envisaged in UMTS. The skilled person may substitute any known method of resource allocation without subtracting from the current invention.

In shared resource systems, the cost of a given connection is often directly related to the resource usage of the connection. A user input related to cost may therefore be advantageous but it can also include parameters such as video quality, video data rate, bandwidth of the video communication link, delay and update rate. The user input is not limited to be a specific desired value but can be a maximum value, a minimum value or a range of values. In addition the user input is not limited to being a single parameter but can be a combination of parameters. For example, the user can specify a desired quality level and a maximum cost per minute above which a reduced quality level is preferred.

The video signal can be obtained from any source such as for example a video camera, video cassette recorder or video broadcast receiver. The video encoder 103 must be able to generate a number of different video rates. Variable rate video coders are known in the art and any of the known methods for video encoding may be used without subtracting from the current invention.

The transmitter 105 is a suitable transmitter for transmitting the video data over the appropriate medium for the video communication link 107. If the video communication link 107 is a radio channel the transmitter 105 will thus be a suitable radio transmitter and if the video communication link 107 is a telephone line the transmitter 105 will be a suitable telephone modem. Correspondingly, the receiver 109 is a suitable receiver for receiving the video data from the appropriate medium for the video communication link. In the example just given the receiver would thus be a suitable radio receiver or telephone modem.

The video data signal is fed to the video decoder 110 which is a variable data rate video decoder compatible with the encoder used in the video transmission unit 102. The current format of the received video data signal must be known or determined by the decoder. The preferred method of achieving this is by including data in the video signal data which indicates the current format.

The decoded video signal is presented to the user in any suitable form. The preferred method is in a window on a computer monitor but for example a dedicated video monitor may be used, or the signal may be modulated and presented on a standard television.

The user is provided with means for making a user input 113. Any method for making this input is applicable to the current invention but the preferred alternative is for the user input to be integrated with the video display for example by controlling an on-screen slider, indicator or similar by means of a mouse, trackball, trackpad, keypad or similar. Alternatively, a separate switch, dial or other separate method of input may be provided.

If needed the user input is encoded in a suitable data protocol. For example, an analogue input will be converted into a digital value. The user input data is transmitted over a feedback communication link 119 by a feedback transmitter 117. The feedback transmitter may be any transmitter appropriate for the feedback communication link, such as a radio receiver or a telephone modem. The video communication link and the feedback communication link may be different links using different technologies. For example, a high bandwidth radio link can be used for the video communication link and a low bandwidth telephone connection can be used for the feedback communication link.

The user input data is received by a suitable receiver 121 which connects to a controller 123. The feedback receiver may again be any receiver compatible with the transmission medium and the feedback transmitter. In the simplest case the feedback transmitter, encoder and receiver are omitted and the user input is feed directly to the controller in the video source unit. An example is where a wire directly connects the user input device to the controller 123. The controller 123 controls the video encoder 103 based on the user input data received from the feedback receiver 123.

The embodiment of the individual elements of the communication system as described above are given by way of example only, and the skilled person may substitute any known method without subtracting from the current invention.

In accordance with the invention, the user can further be provided with an indicator of one or more parameters of the video communication. The preferred parameter is the current cost per minute but other parameters include video quality, video data rate, bandwidth of the video communication link, delay and update rate. By displaying for example the cost per minute in addition to the received video signal the user can directly monitor the trade-off between quality and cost caused by the current user input. In addition the video receiving unit may further include means for emulating and displaying a video signal corresponding to a given quality level or user setting. This will allow the user to preview the result of a given user setting before feeding the setting back to the video transmitting unit. This is a significant advantage in systems where the alteration of the video signal data rate is slow or complex, as for example may be the case in a system with centrally controlled resource allocation.

An alternative embodiment of the invention is in a communication system supporting a two or more way video connection, where the user input of one user is used to determine the video data rate of other video links. FIG. 4 illustrates an embodiment of such a two way video communication system 400. The system is identical to the system illustrated in FIG. 1 except that a second video transmitter 401 co-located with the first video receiver 104, and a second video receiver 403 co-located with the first video transmitter 102 are included. The second video transmitter 401 is controlled by the user input 113 of the first video receiver 104 by the output of the encoder 115 of the first video receiver 104 being connected to the controller 123 of the second video transmitter 401. This provides substantial benefits in a system where for example the cost of all video links are attributed to one of the users.

The invention thus provides a communication system and related method for communication of video signals where the receiving user can control the video transmission. The invention thereby provides improved dynamic control for the receiving user.

## Claims

1. A radio communication system for transmitting a first video signal, including a first video transmitter (102) with means for generating a first video transmission from said first video signal, a first communication link (107) sharing a common resource with other services and a first video receiver (104) located remotely from the first video transmitter (102), **characterised by** comprising:
means (113) for locally receiving a user input at the first video receiver (104);means (115, 117,119) for providing a feedback of said user input to said first video transmitter from said first video receiver (104);
means (123) for altering at least a first characteristic of said first video transmission responsive to said user input and the first video receiver further comprising means for indicating to a user at least a second characteristic of the first video transmission.

2. A radio communication system as claimed in Claim 1 wherein said user input is **characterised by** being an input or combination of inputs chosen from the group of:
a) a quality requirement;
b) a price requirement;
c) a bandwidth requirement;
d) a video update requirement; and
e) a video data rate requirement.

3. A radio communication system as claimed in Claim 1 wherein said second characteristic of the first video transmission is chosen from the group of
a) quality;
b) cost;
c) bandwidth;
d) video update rate; and
e) video data rate.

4. A radio communication system as claimed in Claim 1 wherein said first video receiver further comprises means for emulating the effect of the user input.

5. A radio communication system as claimed in claim 1 further including a second video transmitter with means for generating a second video transmission from a second video signal, a second communication link and a second video receiver, and further comprising
means for providing a second feedback of said user input to said second video transmitter; and
means for altering at least a first characteristic of said second video transmission responsive to said user input.

6. A radio communication system as claimed in claim 1 wherein said user input is used for controlling a plurality of video transmitters.

7. A radio communication system as claimed in Claim 1 **characterised by** being a cellular radio communication system (300) including a first central station (301) and a plurality of remote units (303) sharing a common frequency resource.

8. A radio communication system as claimed in Claim 7 wherein a packet access scheme is used for sharing of said common frequency resource.

9. A radio communication system as claimed in Claim 7 wherein a central allocation scheme is used for sharing of said common frequency resource.

10. A method for transmitting a first video signal in a radio communication system including a first video transmitter (102) with means (115)for generating a first video transmission from said first video signal, a first communication link (107) sharing a common radio resource with other services and a first video receiver (104) located remotely from the first video transmitter (102), **characterised by** comprising the steps of:
locally receiving (201) a user input at the first video receiver (105);
providing (203) a feedback of said user input to said first video transmitter (102) from said first video receiver (104);
indicating at least a second characteristic of said first video transmission at the first video receiver (105); and
altering (205) at least a first characteristic of said first video transmission responsive to said user input.

11. A method as claimed in Claim 10 wherein said user input is **characterised by** being an input or combination of inputs chosen from the group of:
a) a quality requirement;
b) a price requirement;
c) a bandwidth requirement;
d) a video update requirement; and
e) a video data rate requirement.

12. A method as claimed in Claim 10 wherein said second characteristic of said first video transmission is chosen from the group of
a) quality;
b) cost;
c) bandwidth;
d) video update rate; and
e) video data rate.

13. A method as claimed in Claim 10 further comprising the step of emulating the effect of said user input at said first video receiver (104).

14. A method as claimed in claim 10 with the radio communication system further including a second video transmitter with means for generating a second video transmission from a second video signal, a second communication link and a second video receiver, and further comprising the steps of:
providing a feedback of said user input to said second video transmitter; and
altering at least a first characteristic of said second video transmission responsive to said user input.

15. A method as claimed in Claim 11 wherein the radio communication system is **characterised by** being a cellular radio communication system (300) including a first central station (301) and a plurality of remote units (303) sharing a common frequency resource.

16. A method as claimed in Claim 15 wherein a packet access scheme is used for sharing of said common frequency resource.

17. A method as claimed in Claim 15 wherein a central allocation scheme is used for sharing of said common frequency resource.

## Patentansprüche

1. Funkkommunikationssystem zum Übertragen eines ersten Videosignals, wobei das System Folgendes umfasst: einen ersten Videosender (102) mit Mitteln zum Erzeugen einer ersten Videoübertragung aus dem ersten Videosignals, eine erste Kommunikationsverbindung (107), die sich mit anderen Diensten eine gemeinsame Ressource teilt, und einen ersten Videoempfänger (104), der entfernt von dem ersten Videosender (102) angeordnet ist, **dadurch gekennzeichnet, dass** das System Folgendes umfasst: Mittel (113) zum lokalen Empfang einer Benutzereingabe an dem ersten Videoempfänger (104); Mittel (115, 117, 119) zum Bereitstellen eines Feedbacks der Benutzereingabe von dem ersten Videoempfänger (104) zu dem ersten Videosender; Mittel (123) zum Ändern mindestens einer ersten Eigenschaft der ersten Videoübertragung in Reaktion auf die Benutzereingabe, wobei der erste Videoempfänger weiterhin Mittel umfasst, um einem Benutzer mindestens eine zweite Eigenschaft der ersten Videoübertragung anzuzeigen.

2. Funkkommunikationssystem nach Anspruch 1, wobei die Benutzereingabe **dadurch gekennzeichnet ist, dass** es eine aus der folgenden Gruppe ausgewählte Eingabe oder Kombination von Eingaben ist:
a) eine Qualitätsanforderung;
b) eine Preisanforderung;
c) eine Bandbreitenanforderung;
d) eine Video-Update-Anforderung; und
e) eine Videodatenratenanforderung.

3. Funkkommunikationssystem nach Anspruch 1, wobei die zweite Eigenschaft der ersten Videoübertragung aus der folgenden Gruppe ausgewählt ist:
a) Qualität;
b) Kosten;
c) Bandbreite;
d) Video-Update-Rate; und
e) Videodatenrate.

4. Funkkommunikationssystem nach Anspruch 1, wobei der erste Videoempfänger weiterhin Mittel zum Emulieren der Wirkung der Benutzereingabe umfasst.

5. Funkkommunikationssystem nach Anspruch 1, das weiterhin einen zweiten Videosender mit Mitteln zum Erzeugen einer zweiten Videoübertragung aus einem zweiten Videosignal, eine zweite Kommunikationsverbindung und einen zweiten Videoempfänger umfasst, und das weiterhin umfasst:
Mittel zum Bereitstellen eines zweiten Feedbacks der Benutzereingabe zu dem zweiten Videosender; und
Mittel zum Ändern mindestens einer ersten Eigenschaft der zweiten Videoübertragung in Reaktion auf die Benutzereingabe.

6. Funkkommunikationssystem nach Anspruch 1, wobei die Benutzereingabe dazu verwendet wird, mehrere Videosender zu steuern.

7. Funkkommunikationssystem nach Anspruch 1, **dadurch gekennzeichnet, dass** es ein zellulares Funkkommunikationssystem (300) ist, das eine erste Zentralstation (301) und mehrere entfernte Einheiten (303) umfasst, die sich eine Ressource mit einer gemeinsamen Frequenz teilen.

8. Funkkommunikationssystem nach Anspruch 7, wobei ein Paketzugangsschema verwendet wird, um sich eine gemeinsame Frequenzressource zu teilen.

9. Funkkommunikationssystem nach Anspruch 7, wobei ein zentrales Zuweisungsschema verwendet wird, um sich die gemeinsame Frequenzressource zu teilen.

10. Verfahren zum Übertragen eines ersten Videosignals in einem Funkkommunikationssystem, das einen ersten Videosender (102) mit Mitteln (115) zum Erzeugen einer ersten Videoübertragung aus dem ersten Videosignal, eine erste Kommunikationsverbindung (107), die sich mit anderen Diensten eine gemeinsame Funkressource teilt, und einen ersten Videoempfänger (104) umfasst, der entfernt von dem ersten Videosender (102) angeordnet ist, **dadurch gekennzeichnet, dass** es die folgenden Schritte umfasst:
lokales Empfangen (201) einer Benutzereingabe an dem ersten Videoempfänger (105);
Bereitstellen (203) eines Feedbacks der Benutzereingabe von dem ersten Videoempfänger (104) zu dem ersten Videosender (102);
Anzeigen mindestens einer zweiten Eigenschaft der ersten Videoübertragung an dem ersten Videoempfänger (105); und
Ändern (205) mindestens einer ersten Eigenschaft der ersten Videoübertragung in Reaktion auf die Benutzereingabe.

11. Verfahren nach Anspruch 10, wobei die Benutzereingabe **dadurch gekennzeichnet ist, dass** es eine aus der folgenden Gruppe ausgewählte Eingabe oder Kombination von Eingaben ist:
a) eine Qualitätsanforderung;
b) eine Preisanforderung;
c) eine Bandbreitenanforderung;
d) eine Video-Update-Anforderung; und
e) eine Videodatenratenanforderung.

12. Verfahren nach Anspruch 10, wobei die zweite Eigenschaft der ersten Videoübertragung ausgewählt ist aus der folgenden Gruppe:
a) Qualität;
b) Kosten;
c) Bandbreite;
d) Video-Update-Rate; und
e) Videodatenrate.

13. Verfahren nach Anspruch 10, das weiterhin den Schritt des Emulierens der Wirkung der Benutzereingabe an dem ersten Videoempfänger (104) umfasst.

14. Verfahren nach Anspruch 10, wobei das Funkkommunikationssystem weiterhin einen zweiten Videosender mit Mitteln zum Erzeugen einer zweiten Videoübertragung aus einem zweiten Videosignal, eine zweite Kommunikationsverbindung und einen zweiten Videoempfänger umfasst, und wobei das Verfahren weiterhin die folgenden Schritte umfasst:
Bereitstellen eines Feedbacks der Benutzereingabe zu dem zweiten Videosender; und
Ändern mindestens einer ersten Eigenschaft der zweiten Videoübertragung in Reaktion auf die Benutzereingabe.

15. Verfahren nach Anspruch 11, wobei das Funkkommunikationssystem **dadurch gekennzeichnet ist, dass** es ein zellulares Funkkommunikationssystem (300) mit einer ersten Zentralstation (301) und mehreren entfernten Einheiten (303) ist, die sich eine gemeinsame Frequenzressource teilen.

16. Verfahren nach Anspruch 15, wobei ein Paketzugangsschema verwendet wird, um sich die gemeinsame Frequenzressource zu teilen.

17. Verfahren nach Anspruch 15, wobei ein zentrales Zuweisungsschema verwendet wird, um sich die gemeinsame Frequenzressource zu teilen.

## Revendications

1. Système de radiocommunication pour l'émission d'un premier signal vidéo, incluant un premier émetteur vidéo (102) comportant des moyens pour produire une première émission vidéo à partir dudit premier signal vidéo, un premier lien de communication (107) partageant une ressource commune avec d'autres services et un premier émetteur vidéo (104) situé à distance du premier émetteur vidéo (102), **caractérisé en ce qu'**il comprend:
des moyens (113) pour recevoir localement une entrée d'utilisateur dans le premier récepteur vidéo (104); des moyens (115, 117, 119) pour réaliser une rétroaction de ladite entrée d'utilisateur audit premier émetteur vidéo à partir dudit premier récepteur vidéo (104);
des moyens (123) pour modifier au moins une première caractéristique de ladite première émission vidéo en réponse à ladite entrée d'utilisateur, et le premier récepteur vidéo comprenant en outre des moyens pour indiquer à un utilisateur au moins une seconde caractéristique de la première émission vidéo.

2. Système de radiocommunication selon la revendication 1, dans lequel ladite entrée d'utilisateur est **caractérisée en ce qu'**il s'agit d'une entrée ou d'une combinaison d'entrées choisies dans le groupe comprenant:
a) une exigence de qualité;
b) une exigence de prix;
c) une exigence de largeur de bande;
d) une exigence de mise-à-jour vidéo; et
e) une exigence de cadence de données vidéo.

3. Système de radiocommunication selon la revendication 1, dans lequel ladite seconde caractéristique de la première émission vidéo est choisie dans le groupe comprenant
a) la qualité;
b) le coût;
c) la largeur de bande;
d) la cadence de mise-à-jour vidéo; et
e) la cadence de données vidéo.

4. Système de radiocommunication selon la revendication 1, dans lequel ledit premier récepteur vidéo comprend en outre des moyens pour émuler l'effet de l'entrée d'utilisateur.

5. Système de radiocommunication selon la revendication 1, incluant en outre un second émetteur vidéo comprenant des moyens pour produire une seconde émission vidéo à partir d'un second signal vidéo, un second lien de communication et un second récepteur vidéo, et comprenant en outre
des moyens pour réaliser une seconde rétroaction de ladite entrée d'utilisateur audit second émetteur vidéo; et
des moyens pour modifier au moins une première caractéristique de ladite seconde émission vidéo en réponse à ladite entrée d'utilisateur.

6. Système de radiocommunication selon la revendication 1, dans lequel ladite entrée d'utilisateur est utilisée pour commander une pluralité d'émetteurs vidéo.

7. Système de radiocommunication selon la revendication 1, **caractérisé en ce qu'**il s'agit d'un système de radiocommunication cellulaire (300) incluant une première station centrale (301) et une pluralité d'unités distantes (303) se partageant une ressource commune de fréquences.

8. Système de radiocommunication selon la revendication 7, dans lequel un système d'accès par paquets est utilisé pour l'utilisation en commun de ladite ressource commune de fréquences.

9. Système de radiocommunication selon la revendication 7, dans lequel un système central d'affectation est utilisé pour l'utilisation en commun de ladite ressource commune de fréquences.

10. Procédé pour émettre un premier signal vidéo dans un système de radiocommunication incluant un premier émetteur vidéo (102) comportant des moyens (115) pour produire une première émission vidéo à partir dudit premier signal vidéo, un premier lien de communication (107) partageant une ressource commune avec d'autres services et un premier récepteur vidéo (104) situé à distance du premier émetteur vidéo (102),
**caractérisé en ce qu'**il comprend les étapes consistant à:
recevoir localement (201) une entrée d'utilisateur au niveau du premier récepteur vidéo (104);
réaliser (203) une rétroaction de ladite entrée d'utilisateur audit premier émetteur vidéo (102) à partir dudit premier récepteur vidéo (104);
indiquer au moins une seconde caractéristique de ladite première émission vidéo dans le premier récepteur vidéo (105); et
modifier (205) au moins une première caractéristique de ladite première transmission vidéo sensible à ladite entrée d'utilisateur.

11. Procédé selon la revendication 10, selon lequel ladite entrée d'utilisateur est **caractérisée en ce qu'**il s'agit d'une entrée ou d'une combinaisons d'entrées choisies dans le groupe:
a) une exigence de qualité;
b) une exigence de prix;
c) une exigence de largeur de bande;
d) une exigence de mise-à-jour vidéo; et
e) une exigence de cadence de données vidéo.

12. Procédé selon la revendication 10, selon lequel ladite seconde caractéristique de la première émission vidéo est choisie dans le groupe comprenant
a) la qualité;
b) le coût;
c) la largeur de bande;
d) la cadence de mise-à-jour vidéo; et
e) la cadence de données vidéo.

13. Procédé selon la revendication 10, comprenant en outre l'étape consistant à émuler l'effet de ladite entrée d'utilisateur dans ledit premier récepteur vidéo (104).

14. Procédé selon la revendication 10, selon lequel le système de radiocommunication inclut en outre un second émetteur vidéo comprenant des moyens pour produire une seconde émission vidéo à partir d'un second signal vidéo, un second lien de communication et un second récepteur vidéo, et comprenant en outre les étapes consistant à:
exécuter une rétroaction de ladite entrée d'utilisateur audit second émetteur vidéo; et
modifier au moins une première caractéristique de ladite seconde émission vidéo en réponse à ladite entrée d'utilisateur.

15. Procédé selon la revendication 11, selon lequel le système de radiocommunication est **caractérisé en ce qu'**il s'agit d'un système de radiocommunication cellulaire (320) incluant une première station centrale (300) et une pluralité d'unités distantes (303) se partageant une ressource commune de fréquences.

16. Procédé selon la revendication 15, selon lequel un système d'accès par paquets est utilisé pour se partager ladite ressource commune de fréquences.

17. Procédé selon la revendication 15, selon lequel un système central d'affectation est utilisé pour le partage de ladite ressource commune de fréquences.
